# EUROPÄISCHE PATENTSCHRIFT

(11) **EP 1 311 579 B1**
(45) Veröffentlichungstag und Bekanntmachung des Hinweises auf die Patenterteilung: **10.05.2006**
(21) Anmeldenummer: 01980259.4
(22) Anmeldetag: 22.08.2001
(51) Int. Cl.: C08G 18/62, C08G 18/81, C08F 4/16

(54) **Verfahren zur Herstellung von Beschichtungsstoffen, Klebstoffen und Dichtungsmassen**
METHOD OF PRODUCTION OF COATING MATERIALS, ADHESIVES AND SEALING COMPOUNDS
PROCEDE DE PREPARATION DES MATIERES DE REVETEMENT, DES MATIERES ADHESIVES ET DES MATIERES D'ETANCHEITE

(30) Priorität: 24.08.2000 DE 10041636
(43) Veröffentlichungstag der Anmeldung: 21.05.2003
(73) Patentinhaber: BASF Coatings AG, 48165 Münster (DE)
(72) Erfinder: BAUMGART, Hubert, 48163 Münster (DE); MEISENBURG, Uwe, 47051 Duisburg (DE); JOOST, Karl-Heinz, 48317 Drensteinfurt (DE)
(74) Vertreter: Fitzner, Uwe
(86) Internationale Anmeldenummer: PCT/EP2001/009698
(87) Internationale Veröffentlichungsnummer: WO 2002/016461

(56) Entgegenhaltungen:
- EP-A- 0 540 884
- US-A- 4 288 527

## Beschreibung

Die vorliegende Erfindung betrifft ein Verfahren zur Herstellung und Verwendung von Beschichtungsstoffen, Klebstoffen und Dichtungsmassen.

Beschichtungsstoffe, Klebstoffe und Dichtungsmassen, die sowohl thermisch als auch mit aktinischer Strahlung härtbar sind (Dual-Cure-Beschichtungsstoffe, Klebstoffe und -Dichtungsmassen), gewinnen immer mehr an Interesse, weil sie zahlreiche Vorteile bieten.

So sind Dual-Cure-Beschichtungsstoffe zum einem besser für die Beschichtung thermisch empfindlicher Substrate geeignet als Beschichtungsstoffe, die nur thermisch härtbar sind, da bei ihnen eine möglicherweise unvollständige thermische Härtung bei niedrigen Temperaturen durch die Härtung mit aktinischer Strahlung kompensiert werden kann, so daß insgesamt Beschichtungen mit guten anwendungstechnischen Eigenschaften resultieren. Zum anderen sind Dual-Cure-Beschichtungsstoffe besser für die Beschichtung komplex geformter dreidimensionaler Substrate geeignet als Beschichtungsstoffe, die nur mit aktinischer Strahlung härtbar sind, da eine unvollständige Strahlenhärtung in den Schattenbereichen der Substrate durch die thermische Härtung kompensiert werden kann, so daß auch hier insgesamt Beschichtungen mit guten anwendungstechnischen Eigenschaften resultieren.

Dies gilt mutatis mutandis auch für die Dual-Cure-Klebstoffe und - Dichtungsmassen.

Im Rahmen der vorliegenden Erfindung ist unter aktinischer Strahlung elektromagnetische Strahlung wie nahes Infrarot (NIR), sichtbares Licht, UV-Strahlung und Röntgenstrahlung oder Korpuskularstrahlung wie Elektronenstrahlung zu verstehen.

Beschichtungsstoffe, die
(I) mindestens einen Bestandteil, der im statistischen Mittel
   (A) mindestens eine funktionelle Gruppe mit mindestens einer Bindung, die thermisch und/oder mit aktinischer Strahlung aktivierbar ist,
      und/oder
   (B) mindestens eine reaktive furiktionelle Gruppe, die mit Gruppen der eigenen Art und/oder mit komplementären reaktiven funktionellen Gruppen thermische Vemetzungsreaktionen eingehen kann,
   im Molekül enthält;
   mit der Maßgabe enthalten, daß stets Gruppen (A) und (B) vorhanden sind, sind bekannt.

Aus der US 4,288,527 ist bekannt, Beschichtungen, die mit UV-Strahlung und thermisch gehärtet werden können, sowie Produkte herstellbar durch Härtung mit UV-Strahlung und thermische Härtung zur Verfügung zu stellen.

Eine rein thermische Härtung wird nicht beschrieben. Im Gegenteil, aus der US Schrift geht sogar hervor, daß die dort beschriebene Härtung durch Strahlung und Wärme notwendig ist, weil die Strahlenhärtung allein nicht ausreicht.

Aus der EP 0540884 ist bekannt, ein Lackierverfahren zur Verfügung zu stellen, bei dem der Overspray recyclisierbar ist. Bei der Applikation wird energiereiche Strahlung ausgeschlossen, die dann aber bei der Härtung verwandt wird. Eine rein thermische Härtung wird nicht beschrieben.

Aus der europäischen Patentanmeldung EP 0 928 800 A 1 ist ein Dual-Cure-Beschichtungsstoff bekannt, der ein Urethan(meth)acrylat mit freien Isocyanatgruppen und (Meth)Acryloylgruppen, einen Photoinitiator und eine isocyanatreaktive Verbindung, insbesondere ein Polyol oder Polyamin, enthält. Die freien Isocyanatgruppen und die isocyanatreaktiven funktionellen Gruppen der Verbindung sind komplementäre reaktive funktionelle Gruppen, die thermische Vemetzungsreaktionen eingehen können. Dieser Dual-Cure-Beschichtungsstoff bietet die Möglichkeit, die Eigenschaftsprofile von Beschichtungsstoff und von Beschichtung zu variieren und gezielt an unterschiedliche Verwendungszwecke anzupassen. Die rein thermische Härtung des bekannten Dual-Cure-Beschichtungsstoffs wird in der Patentanmeldung nicht beschrieben.

Aus dem amerikanischen Patent US 4,288,527 A ist ein flüssiger Dual-Cure-Beschichtungsstoff bekannt, der thermisch und mit aktinischer Strahlung gehärtet wird. Er enthält mindestens ein flüssiges multifunktionelles olefinisch ungesättigtes Monomer, einen Photoinitiator und ein substituiertes oder unsubstituiertes Pinakol. Der Dual-Cure-Beschichtungsstoff enthält keine reaktiven funktionellen Gruppen, die mit Gruppen der eigenen Art oder mit komplementären reaktiven funktionellen Gruppen thermische Vernetzungsreaktion eingehen. Somit ist der aus dem Patent bekannte Dual-Cure-Beschichtungsstoff kein Dual-Cure-Beschichtungsstoff der i. S. der vorliegenden Erfindung. Außerdem läßt das Patent die Frage offen, ob der hieraus bekannte Dual-Cure-Beschichtungsstoff auch durch die rein thermische Härtung brauchbare Beschichtungen liefert.

Bei allen Vorteilen der bisher bekannten Dual-Cure-Beschichtungsstoffe bleibt ein wesentlicher Nachteil, daß nämlich bei der Beschichtung komplexer dreidimensionaler Gegenstände wie beispielsweise Automobilkarosserien die Härtung mit aktinischer Strahlung aufwendig ist, weil spezielle bewegbare Belichtungsanlagen verwendet werden müssen. Es ist deshalb in hohem Maße wünschenswert, einen Dual-Cure-Beschichtungsstoff zur Verfügung zu haben, der im Bedarfsfall auch rein thermisch ausgehärtet werden kann, ohne daß die besonderen Vorteile von Beschichtungsstoff von Beschichtung verlorengehen.

Aus der deutschen Patentanmeldung DE 199 58 726.4 ist ein Dual-Cure-Beschichtungsstoff der eingangs genannten Art bekannt. Er enthält die Polyurethandispersion, die aus aliphatischen Polyisocyanaten, Verbindungen mit isocyanatreaktiven funktionellen Gruppen sowie mit aktinischer Strahlung aktivierbaren Bindungen, niedermolekularen aliphatischen Verbindungen mit isocyanatreaktiven funktionellen Gruppen, Verbindungen mit isocyanatreaktiven funktionellen Gruppen und dispergierenden funktionellen Gruppen, Neutralisationsmittel für die dispergierenden funktionellen Gruppen, Blockierungsmitteln für Isocyanatgruppen und/oder Verbindungen mit blockierten Isocyanatgruppen aufgebaut ist, wobei die blockierten Isocyanatgruppen über die Umsetzung der Blockierungsmittel mit isocyanatgruppenhaltigen Polyurethanpräpolymeren in die Polyurethandispersion eingeführt werden. Dieser Dual-Cure-Beschichtungsstoff kann auch rein thermisch gehärtet werden. Außerdem kann er neben zahlreichen anderen thermolabilen radikalischen Initiatoren auch C-C-spaltende Initiatoren wie Benzpinakolsilylether in einer Menge von, bezogen auf die Gesamtmenge der Dispersion, 0,1 bis 10 Gew.-% enthalten. Allerdings wird die Verwendung von Gemischen aus monomeren und oligomeren Benzpinakolsilylethern hierin nicht beschrieben.

In der nicht vorveröffentlichten deutschen Patentanmeldung DE 199 61 926.3 wird ein Dual-Cure-Beschichtungsstoff der eingangs genannten Art beschrieben. Er enthält mindestens einen Bestandteil, der pro Molekül im statistischen Mittel mindestens eine primäre oder sekundäre Carbamatgruppe (reaktive funktionelle Gruppe) und mindestens eine mit aktinischer Strahlung aktivierbare Bindung aufweist. Als komplementäre reaktive funktionelle Gruppen werden N-Methylol-oder N-Methylolethergruppen genannt. Der Dual-Cure-Beschichtungsstoff kann ebenfalls thermolabile radikalische Initiatoren wie C-C-spaltende Initiatoren wie Benzpinakolsilylether enthalten. Allerdings werden weder die Mengen angegeben, in denen sie verwendet werden sollen, noch wird die Verwendung von Gemischen aus monomeren und oligomeren Benzpinakolsilylethern beschrieben.

Gleiches gilt für den Dual Cure-Beschichtungsstoff, der in der deutschen Patentanmeldung DE 100 27 292.4 beschrieben wird.

Aufgabe der vorliegenden Erfindung ist es, ein Verfahren zur Herstellung von Beschichtungsstoffen, Klebstoffen und Dichtungsmassen zur Verfügung zu stellen. Die erhaltenen thermisch härtbaren Beschichtungsstoffe, Klebstoffe und Dichtungsmassen sollen durch die rein thermische Härtung ebenso gute, wenn nicht gar bessere Beschichtungen, Klebschichten und Dichtungen liefern, wie durch die Dual-Cure-Härtung. Des weiteren sollen die Beschichtungen abriebfest, kratzfest und hochglänzend sein.

Demgemäß wurde ein Verfahren zur Herstellung von Beschichtungen, Klebschichten und Dichtungen gefunden basierend auf
einem thermisch härtbaren Stoffgemisch I, enthaltend
(I) mindestens einen Bestandteil, der im statistischen Mittel
   (A) mindestens eine funktionelle Gruppe mit mindestens einer Bindung, die thermisch und/oder mit aktinischer Strahlung aktivierbar ist,
      und/oder
   (B) mindestens eine reaktive funktionelle Gruppe, die mit Gruppen der eigenen Art und/oder mit komplementären reaktiven funktionellen Gruppen thermische Vemetzungsreaktionen eingehen kann,
   im Molekül enthält;
   mit der Maßgabe, daß stets Gruppen (A) und (B) im Stoffgemisch vorhanden sind;
   ausgenommen die Polyurethandispersion, die aus aliphatischen Polyisocyanaten, Verbindungen mit isocyanatreaktiven funktionellen Gruppen sowie mit aktinischer Strahlung aktivierbaren Bindungen, niedermolekularen aliphatischen Verbindungen mit isocyanatreaktiven funktionellen Gruppen, Verbindungen mit isocyanatreaktiven funktionellen Gruppen und dispergierenden funktionellen Gruppen, Neutralisationsmittel für die dispergierenden funktionellen Gruppen, Blockierungsmitteln für Isocyanatgruppen und/oder Verbindungen mit blockierten Isocyanatgruppen aufgebaut ist, wobei die blockierten Isocyanatgruppen über die Umsetzung der Blockierungsmittel mit isocyanatgruppenhaltigen Polyurethanpräpolymeren in die Polyurethandispersion eingeführt werden;
   und
(II) 0,5 bis 15 Gew.-%, bezogen auf den Festkörper thermisch härtbare Stoffgemischs, mindestens eines C-C-spaltenden Initiators,
oder basierend auf
einem thermisch härtbaren Stoffgemisch II, enthaltend
(I) mindestens einen Bestandteil, der im statistischen Mittel
   (A) mindestens eine funktionelle Gruppe mit mindestens einer Bindung, die thermisch und/oder mit aktinischer Strahlung aktivierbar ist,
      und/oder
   (B) mindestens eine reaktive funktionelle Gruppe, die mit Gruppen der eigenen Art und/oder mit komplementären reaktiven funktionellen Gruppen thermische Vemetzungsreaktionen eingehen kann,
      im Molekül enthält;
      mit der Maßgabe, daß stets Gruppen (A) und (B) im Stoffgemisch vorhanden sind;
      und
   (II) ein Gemisch aus monomeren und oligomeren Benzpinakolsilylethern,
   dadurch gekennzeichnet, daß
   die thermisch härtbaren Stoffgemische I und/oder II rein thermisch gehärtet werden.

Im Hinblick auf den Stand der Technik war es überraschend und für den Fachmann nicht zu erwarten, daß die Aufgabe, die der vorliegenden Erfindung zugrundelag, mit Hilfe der Stoffgemische I und II gelöst werden konnte.

Insbesondere war es überraschend, daß die Beschichtungsstoffe, Klebstoffe und Dichtungsmassen, die auf den Stoffgemischen I und II basieren, durch die rein thermische Härtung Beschichtungen, Klebschichten und Dichtungen mit einem mindestens ebenso guten anwendungstechnischen Eigenschaftsprofil lieferten wie die Beschichtungen, Klebschichten und Dichtungen, die durch Dual-Cure-Härtung hergestellt wurden. Noch mehr überraschte hierbei, daß die in der Gegenwart von Photoinitiatoren thermisch gehärteten Beschichtungen einen besonders hohen Glanz aufwiesen.

Das Stoffgemisch I enthält als erfindungswesentlichen Bestandteil mindestens einen C-C-spaltenden Initiator in einer Menge von 0,5 bis 15, vorzugsweise 1,0 bis 8, bevorzugt 1,5 bis 7, besonders bevorzugt 2,0 bis 6,0 und insbesondere 2,0 bis 5,0 Gew.-%, jeweils bezogen auf den Festkörper der Stoffgemische I und II.

Im Rahmen der vorliegenden Erfindung wird hier und im folgenden unter dem Festkörper die Summe der Bestandteile eines thermisch härtbaren Stoffgemischs verstanden, die nach der thermischen Härtung den Feststoffs der resultierenden Produkte, beispielsweise die Beschichtungen, die Klebschichten oder die Dichtungen, aufbauen.

Vorzugsweise werden als C-C-spaltende Initiatoren Benzpinakole verwendet. Beispiele geeigneter Benzpinakole sind Benzpinakolsilylether oder die substituierten und unsubstituierten Benzpinakole, wie sie in dem amerikanischen Patent US 4,288,527 A in Spalte 3, Zeilen 5 bis 44, beschrieben werden. Bevorzugt werden Benzpinakolsilylether, insbesondere Gemische aus monomeren und oligomeren Benzpinakolsilylethern, verwendet.

Besonders gut geeignet sind Gemische aus Benzpinakolsilylethern der allgemeinen Formel I und II:

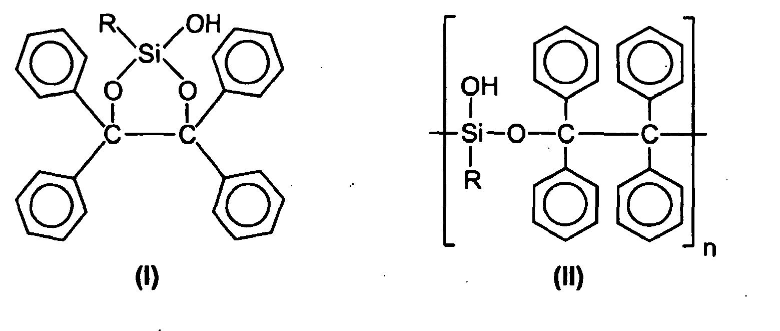

In den allgemeinen Formeln I und II steht die Variable R der allgemeinen Formeln I und II für einen Alkylrest mit 1 bis 18 Kohlenstoffatomen, einen Cycloalkylrest mit 3 bis 10 Kohlenstoffatomen, einen Arylrest mit 6 bis 12 Kohlenstoffatomen und/oder einen Arylalkylgruppen mit 7 bis 30 Kohlenstoffatomen.

Beispiele geeigneter Alkylreste sind Methyl, Ethyl, Propyl, Isopropyl, n-Butyl, Isobutyl, tert.-Butyl, n-Pentyl, Amyl, Hexyl, Pentyl, Octyl, Nonyl und Decyl, insbesondere Methyl.

Beispiele geeigneter Cycloalkylreste sind Cyclopropyl, Cyclobutyl, Cyclopentyl, Cyclohexyl, Cycloheptyl, Norbornenyl, Cyclobutyl oder Decalin, insbesondere Cyclohexyl.
Beispiele geeigneter Arylreste sind Phenyl, Naphthyl oder Diphenylyl, insbesondere Phenyl.

Beispiele geeigneter Arylalkylreste sind, Toluyl, Xylyl, 4-tert.-Butyl-phen-1-yl, 4-Nonyl-phen-1-yl, Benzyl, 4-Phenylcyclohex-1-yl oder 4-Phenyl-prop-1-yl.

Besonders bevorzugt werden Methylreste verwendet.

Der Index der allgemeinen Formel II steht für eine ganze Zahl von 2 bis 100, insbesondere 3 bis 50.

Die Gemische aus den Benzpinakolsilylether I und II sind übliche und bekannte Verbindungen und werden beispielsweise unter der Marke ADDID® 900 von der Firma Wacker vertrieben.

In den Stoffgemischen II sind nur diese Gemische aus den Benzpinakolsilylethern I und II enthalten.

Die Stoffgemische I und II enthalten mindestens einen Bestandteil, der im statistischen Mittel mindestens eine funktionelle Gruppe (A) mit mindestens einer Bindung, die thermisch und/oder mit aktinischer Strahlung aktivierbar ist, und/oder mindestens eine reaktive funktionelle Gruppe (B), die mit Gruppen der eigenen Art und/oder mit komplementären reaktiven funktionellen Gruppen thermische Vemetzungsreaktionen eingehen kann, im Molekül enthält.

Wesentlich ist hierbei, daß stets Gruppen (A) und (B) in den Stoffgemischen I und II vorliegen sein müssen.

Dies bedeutet, daß die Stoffgemische I und II mindestens einen Bestandteil enthalten, der mindestens eine Gruppe (A) und mindestens eine Gruppe (B) enthält. Oder aber die erfindungsgemäßen Stoffgemische I und II enthalten mindestens einen Bestandteil, der mindestens eine Gruppe (A) enthält, und mindestens einen Bestandteil, der mindestens eine Gruppe (B) enthält.

Des weiteren können die Stoffgemische I und II mindestens einen Bestandteil mit mindestens einer Gruppe (A), mindestens einen Bestandteil mit mindestens einer Gruppe (B) und mindestens einen Bestandteil mit mindestens einer Gruppe (A) und mindestens einer Gruppe (B) enthalten.

Vorzugsweise sind in den erfindungsgemäß zu verwendenden Bestandteilen mindestens zwei, bevorzugt mindestens drei und insbesondere mindestens vier der Gruppen (A) und/oder mindestens zwei, bevorzugt mindestens drei und insbesondere mindestens vier der Gruppen (B) enthalten.

Die funktionellen Gruppen (A) enthalten mindestens eine, insbesondere eine, Bindung, die thermisch und/oder mit aktinischer Strahlung aktivierbar ist.

Im Rahmen der vorliegenden Erfindung wird unter einer thermisch und/oder mit aktinischer Strahlung aktivierbaren Bindung eine Bindung verstanden, die bei Bestrahlen mit aktinischer Strahlung und/oder bei Zufuhr von Wärmeenergie reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor -oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte funktionelle Gruppe (A) eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe vorliegen. Erfindungsgemäß ist es von besonderem Vorteil zwei, insbesondere eine, Doppelbindung zu verwenden.

Werden im statistischen Mittel mehr als eine funktionelle Gruppe (A) pro Molekül angewandt, sind die Gruppen strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, funktionelle Gruppen (A) verwendet werden, die sich von zwei, drei, vier oder mehr, insbesondere aber zwei, Monomerklassen ableiten.

Beispiele geeigneter funktioneller Gruppen (A) sind (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Acrylatgruppen.

Vorzugsweise sind die funktionellen Gruppen (A) über Urethan-, Harnstoff-, Allophanat-, Ester-, Ether- und/oder Amidgruppen, insbesondere aber über Estergruppen, an die jeweiligen Grundstrukturen der Bindemittel gebunden. Üblicherweise geschieht dies durch übliche und bekannte polymeranaloge Reaktionen wie etwa die Reaktion von seitenständigen Glycidylgruppen mit den nachstehend beschriebenen olefinisch ungesättigten Monomeren, die eine Säuregruppe enthalten, von seitenständigen Hydroxylgruppen mit den Halogeniden dieser Monomeren, von Hydroxylgruppen mit Doppelbindungen enhaltenden Isocyanaten wie Vinylisocyanat, Methacryloylisocyanat und/oder 1-(1-Isoeyanato-1-methylethyl)-3-(1-methylethenyl)-benzol (TMI® der Firma CYTEC) oder von Isocanatgruppen mit den nachstehend beschriebenen hydroxylgruppenhaltigen Monomeren.

Die reaktiven funktionellen Gruppen (B) können mit Gruppen (B) der eigenen Art (d. h. "mit sich selbst") und/oder mit komplementären reaktiven funktionellen Gruppen (B) thermische Vemetzungsreaktionen eingehen, die im Unterschied zu den Reaktionen der funktionellen Gruppen (A) überwiegend oder ganz nach einem nicht radikalischen Mechanismus ablaufen.

Enthalten die Bestandteile reaktive funktionelle Gruppen (B), die mit sich selbst reagieren, haben sie selbstvernetzende Eigenschaften.

Enthalten die Bestandteile reaktive funktionelle Gruppen (B), die mit komplementären reaktiven funktionellen Gruppen (B) reagieren, haben sie fremdvemetzende Eigenschaften.

Beispiele geeigneter komplementärer reaktiver funktioneller Gruppen (B) sind in der folgenden Übersicht zusammengestellt. In der Übersicht steht die Variable R¹ für einen acyclischen oder cyclischen aliphatischen, einen aromatischen und/oder einen aromatisch-aliphatischen (araliphatischen) Rest; die Variablen R² und R³ stehen für gleiche oder verschiedene aliphatische Reste oder sind miteinander zu einem aliphatischen oder heteroaliphatischen Ring verknüpft.

### Übersicht: Beispiele komplementärer funktioneller Gruppen

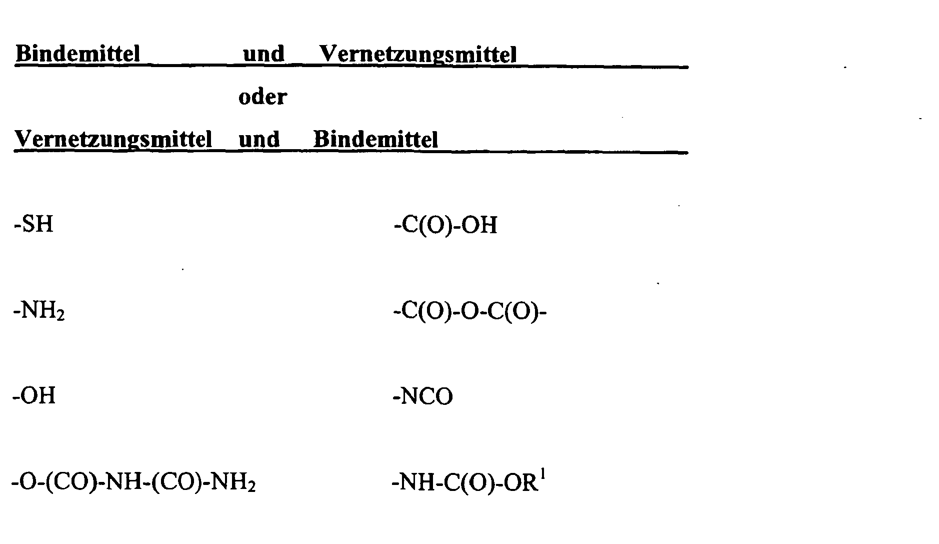

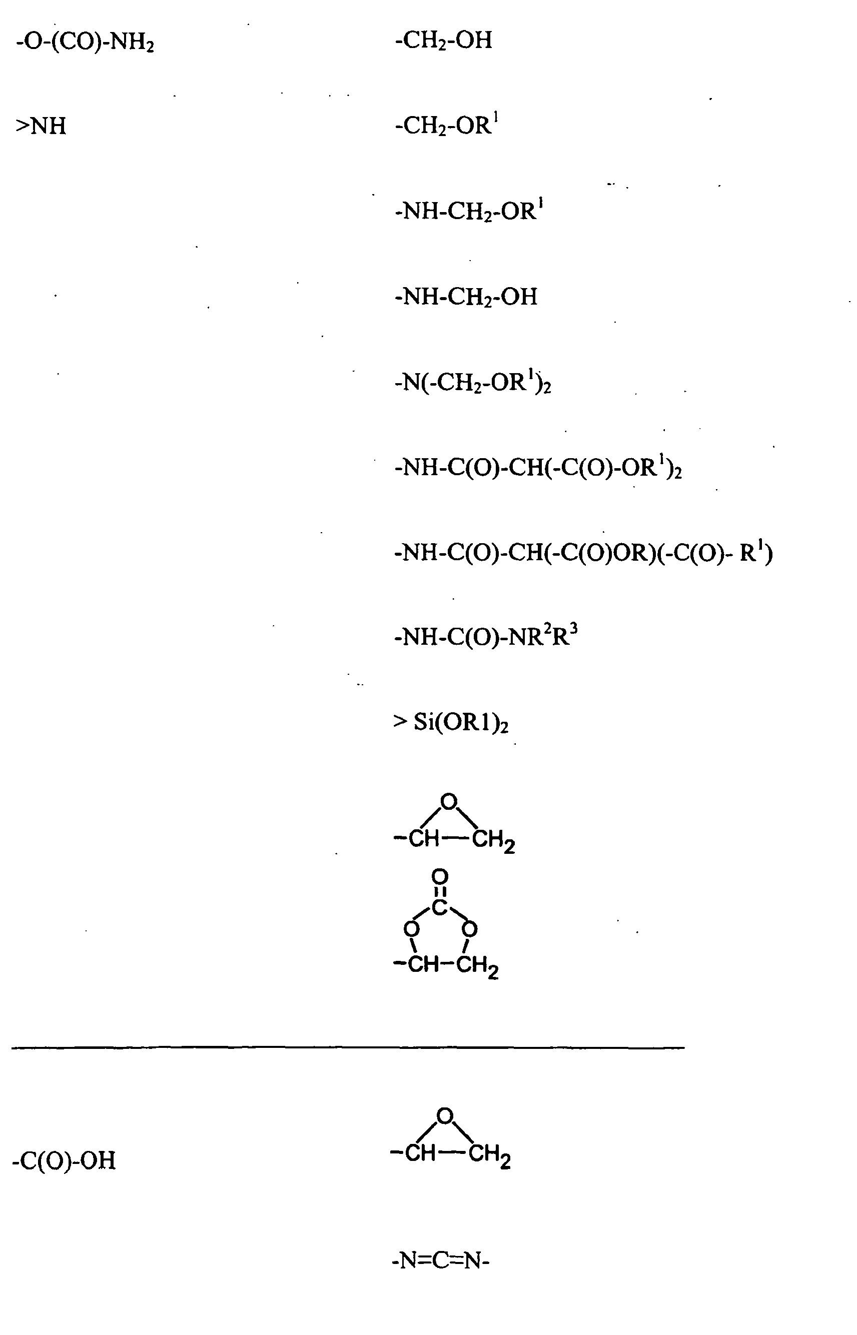

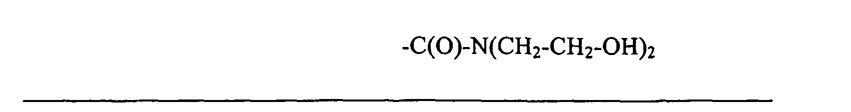

Die Auswahl der jeweiligen komplementären reaktiven funktionellen Gruppen (B) richtet sich zum einen danach, daß sie bei der Herstellung, der Lagerung, der Applikation sowie ggf. dem Aufschmelzen der erfindungsgemäßen Stoffgemische III keine unerwünschten Reaktionen, insbesondere keine vorzeitige Vernetzung, eingehen dürfen, und zum anderen danach, in welchem Temperaturbereich die Vernetzung stattfinden soll.

Vorzugsweise werden bei den erfindungsgemäßen Stoffgemische I und II Vernetzungstemperaturen von 100 bis 200°C angewandt.

Es werden daher vorzugsweise einerseits Thio-, Hydroxyl-, Amino-, N-Methylolamino- N-Alkoxymethylamino-, Imino-, Carbamat-, Allophanat-und/oder Carboxylgruppen und andererseits Anhydrid-, Epoxy-, blockierte und unblockierte Isocyanat-, Urethan-, Methylol-, Methylolether-, Siloxan-, Carbonat-und/oder beta-Hydroxyalkylamidgruppen verwendet.

Im Falle selbstvernetzender erfindungsgemäßer Stoffgemische I und II enthalten die Bestandteile insbesondere Methylol-, Methylolether- und/oder N-Alkoxymethylaminogruppen.

Die Bestandteile mit den vorstehend beschriebenen Gruppen (A) und/oder (B) sind niedermolekulare Verbindungen, Oligomere und/oder Polymere.

Beispiele für geeignete Oligomere und/oder Polymere sind statistisch, alternierend und/oder blockartig aufgebaute lineare und/oder verzweigte und/oder kammartig aufgebaute (Co)Polymerisate von ethylenisch ungesättigten Monomeren, Polyadditionsharze und/oder Polykondensationsharze. Sie werden von der Fachwelt auch als Bindemittel bezeichnet. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, "Bindemittel", verwiesen.

Beispiele geeigneter (Co)Polymerisate sind (Meth)Acrylat(co)polymerisate oder partiell verseifte Polyvinylester, insbesondere (Meth)Acrylatcopolymerisate.

Beispiele geeigneter Polyadditionsharze und/oder Polykondensationsharze sind Polyester, Alkyde, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane, insbesondere Polyester-Polyurethane.

Von diesen Bindemitteln weisen die (Meth)Acrylatcopolymerisate und die Polyester-Polyurethane besondere Vorteile auf und werden deshalb besonders bevorzugt verwendet.

Beispiele geeigneter olefinisch ungesättigter Monomere (b) für die Herstellung der (Meth)Acrylatcopolymerisate sind
(b1) Monomere, welche beispielsweise mindestens eine Hydroxyl-, Amino-, Alkoxymethylamino-, Carbamat-, Allophanat- oder Iminogruppe pro Molekül tragen, durch die die vorstehend beschriebenen komplementären reaktiven funktionellen Gruppen (B) in die Bestandteile eingeführt werden, wie
   - N,N-Di(methoxymethyl)aminoethylacrylat oder -methacrylat oder N,N-Di(butoxymethyl)aminopropylacrylat oder -methacrylat;
   - (Meth)Acrylsäureamide wie (Meth)Acrylsäureamid, N-Methyl-, N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid;
   - Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US 3,479,328 A 1, US 3,674,838 A 1, US 4,126,747 A 1, US 4,279,833 A 1 oder US 4,340,497 A 1 beschrieben; und/oder
   - Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, - crotonat, -maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat, -monomethacrylat, - monoethacrylat, -monocrotonat, -monomaleinat, -monofumarat oder -monoitaconat; Umsetzungsprodukte aus cyclischen Estern, wie z.B. epsilon-Caprolacton und diesen Hydroxyalkyl- oder - cycloalkylestern;
   - olefmisch ungesättigte Alkohole wie Allylalkohol;
   - Polyole wie Trimethylolpropanmono- oder diallylether oder Pentaerythritmono-, -di- oder -triallylether;
   - Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
   - Aminoethylacrylat, Aminoethylmethacrylat, Allylamin oder N-Methyliminoethylacrylat; und/oder
   - Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder - cycloalkylestern der (Meth)Acrylsäure und/oder weiterer hydroxylgruppehaltiger Monomere (b1).
(b2) Monomere, welche mindestens eine Säuregruppe pro Molekül tragen, wie
   - Acrylsäure, Methacrylsäure, Ethacrylsäure, Crotonsäure, Maleinsäure, Fumarsäure oder Itaconsäure;
   - olefmisch ungesättigte Sulfon- oder Phosphonsäuren oder deren Teilester;
   - Maleinsäuremono(meth)acryloyloxyethylester, Bemsteinsäuremono(meth)acryloyloxyethylester oder Phthalsäuremono(meth)acryloyloxyethylester; oder
   - Vinylbenzoesäure (alle Isomere), alpha-Methylvinylbenzoesäure (alle Isomere) oder Vinylbenzsolsulfonsäure (alle Isomere).
(b3) Monomere, die im wesentlichen oder völlig frei von reaktiven funktionellen Gruppen sind, wie:

### Monomere (b31):

Im wesentlichen säuregruppenfreie (Meth)acrylsäureester wie (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobomyl-, Dicyclopentadienyl-, Octahydro-4,7-methano-1H-inden-methanol- oder tert.-Butylcyclohexyl(meth)acrylat; (Meth)Acrylsäureoxaalkylester oder - oxacycloalkylester wie Ethoxytriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)Acrylsäurederivate (weitere Beispiele geeigneter Monomere (b31) dieser Art sind aus der Offenlegungsschrift DE 196 25 773 A 1, Spalte 3, Zeile 65, bis Spalte 4, Zeile 20, bekannt). Diese können in untergeordneten Mengen höherfunktionelle (Meth)Acrylsäurealkyl- oder - cydoalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder - 1,4-diol-di(meth)acrylat; Trimethylolpropan-di- oder -tri(meth)acrylat; oder Pentaerythrit-di-, -tri- oder -tetra(meth)acrylat enthalten. Rahmen der vorliegenden Erfindung sind hierbei unter untergeordneten Mengen an höherfunktionellen Monomeren (b31) solche Mengen zu verstehen, welche nicht zur Vernetzung oder Gelierung der Copolymerisate führen, es sei denn, sie sollen in der Form von vemetzten Mikrogelteilchen vorliegen.

### Monomere (b32):

Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Catbonsäuren, bei denen die Carboxylgruppen vorwiegend an einem quatemären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt. Vinylester dieser Art werden unter der Marke VeoVa® vertrieben (vgl. auch Römpp Lexikon Lacke und Druckfarben, Georg Thieme Verlag, Stuttgart, New York, 1998, Seite 598).

### Monomere (b33):

Diarylethylene, insbesondere solche der allgemeinen Formel III:

**R**^{**4**}**R**^{**5**}**C=CR**^{**6**}**R**^{**7**} (III),

worin die Reste R⁴, R⁵, R⁶ und R⁷ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl-oder Arylcycloalkylreste stehen, mit der Maßgabe, daß mindestens zwei der Variablen R⁴, R⁵, R⁶ und R⁷ für substituierte oder unsubstituierte Aryl-, Arylalkyl-oder Arylcycloalkylreste, insbesondere substituierte oder unsubstituierte Arylreste, stehen. Beispiele geeigneter Alkylreste sind Methyl, Ethyl, Propyl, Isopropyl, n-Butyl, iso-Butyl, tert.-Butyl, Amyl, Hexyl oder 2-Ethylhexyl. Beispiele geeigneter Cycloalkylreste sind Cyclobutyl, Cyclopentyl oder Cyclohexyl. Beispiele geeigneter Alkylcycloalkylreste sind Methylencyclohexan, Ethylencyclohexan oder Propan-1,3-diyl-cyclohexan. Beispiele geeigneter Cycloalkylalkylreste sind 2-, 3- oder 4-Methyl-, -Ethyl-, -Propyl- oder - Butylcyclohex-1-yl. Beispiele geeigneter Arylreste sind Phenyl, Naphthyl oder Biphenylyl, vorzugsweise Phenyl und Naphthyl und insbesondere Phenyl. Beispiele geeigneter Alkylarylreste sind Benzyl oder Ethylen- oder Propan-1,3-diyl-benzol. Beispiele geeigneter Cycloalkylarylreste sind 2-, 3- oder 4-Phenylcyclohex-1-yl. Beispiele geeigneter Arylalkylreste sind 2-, 3- oder 4-Methyl-, -Ethyl-, -Propyl- oder -Butylphen-1-yl. Beispiele geeigneter Arylcycloalkylreste sind 2-, 3- oder 4-Cyclohexylphen-1-yl. Vorzugsweise handelt es sich bei den Arylresten R⁴, R⁵, R⁶ und/oder R⁷ um Phenyl- oder Naphthylreste, insbesondere Phenylreste. Die in den Resten R⁴, R⁵, R⁶ und/oder R⁷ gegebenenfalls vorhandenen Substituenten sind elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl- Arylalkyl-und Arylcycloalkylreste; Aryloxy-, Alkyloxy- und Cycloalkyloxyreste; und/oder Arylthio-, Alkylthio- und Cycloalkylthioreste. Besonders vorteilhaft sind Diphenylethylen, Dinaphthalinethylen, cis- oder trans- Stilben oder Vinyliden-bis(4-nitrobenzol), insbesondere Diphenylethylen (DPE), weswegen sie bevorzugt verwendet werden. Im Rahmen der vorliegenden Erfindung werden die Monomeren (b33) eingesetzt, um die Copolymerisation in vorteilhafter Weise derart zu regeln, daß auch eine radikalische Copolymerisation in Batch-Fahrweise möglich ist.

### Monomere (b34):

Vinylaromatische Kohlenwasserstoffe wie Styrol, Vinyltoluol, Diphenylethylen oder alpha-Alkylstyrole, insbesondere alpha-Methylstyrol.

### Monomere (b35):

Nitrile wie Acrylnitril und/oder Methacrylnitril.

### Monomere (b36):

Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam oder N-Vinylpyrrolidon; 1-Vinylimidazol; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.

### Monomere (b37):

Allylverbindungen, insbesondere Allylether und -ester wie Allylmethyl-, -ethyl-, -propyl- oder -butylether oder Allylacetat, -propionat oder -butyrat.

### Monomere (b38):

Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A 1 auf den Seiten 5 bis 7, der DE 37 06 095 A 1 in den Spalten 3 bis 7, der EP 0 358 153 B 1 auf den Seiten 3 bis 6, in der US 4,754,014 A 1 in den Spalten 5 bis 9, in der DE 44 21 823 A 1 oder in der internationalen Patentanmeldung WO 92/22615 auf Seite 12, Zeile 18, bis Seite 18, Zeile 10, beschrieben sind.

### Monomere (b39):

Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien.
und/oder
(b4) Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.

Höherfunktionelle Monomere der vorstehend beschriebenen Art werden im allgemeinen in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der (Meth)Acrylatcopolymerisate führen, es sei denn, man will gezielt vemetzte polymere Mikroteilchen herstellen.

Beispiele geeigneter Herstellverfahren für (Meth)Acrylatcopolymerisate werden in den europäischen Patentanmeldungen EP 0 767 185 A 1, den deutschen Patenten DE 22 14 650 B 1 oder DE 27 49 576 B 1 und den amerikanischen Patentschriften US 4,091,048 A 1, US 3,781,379 A 1, US 5,480,493 A 1, US 5,475,073 A 1 oder US 5,534,598 A 1 oder in dem Standardwerk Houben-Weyl, Methoden der organischen Chemie, 4. Auflage, Band 14/1, Seiten 24 bis 255, 1961, beschrieben. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in der Patentschriften und den Patentanmeldungen DE 1 071 241 B 1, EP 0 498 583 A 1 oder DE 198 28 742 A 1 oder in dem Artikel von K. Kataoka in Chemical Engineering Science, Band 50, Heft 9, 1995, Seiten 1409 bis 1416, beschrieben werden, in Betracht.

Die Einführung von funktionellen Gruppen (A) kann durch polymeranaloge Umsetzung der vorstehend beschriebenen (Meth)Acrylatcopolymerisate mit geeigneten Verbindungen, die durch aktinische Strahlung aktivierbare Bindungen enthalten, erfolgen. Beispielsweise können gegebenenfalls vorhandene seitenständige Glycidylgruppen der (Meth)Acrylatcopolymerisate mit (Meth)Acrylsäure umgesetzt werden.

Die Herstellung von Polyurethanen mit funktionellen Gruppen (B) und/oder acrylierten Polyurethanen mit funktionellen Gruppen (B) und (A) wird beispielsweise in den Patentanmeldungen EP 0 089 497 A 1, EP 0 256 540 A 1, EP 0 260 447 A 1, EP 0 297 576 A 1, WO 96/12747, EP 0 523 610 A 1, EP 0 228 003 A 1, EP 0 397 806 A 1, EP 0 574 417 A 1, EP 0 531 510 A 1, EP 0 581 211 A 1, EP 0 708 788 A 1, EP 0 593 454 A 1, DE-A-43 28 092 A 1, EP 0 299 148 A 1, EP 0 394 737 A 1, EP 0 590 484 A 1, EP 0 234 362 A 1, EP 0 234 361 A 1, EP 0 543 817 A 1, WO 95/14721, EP 0 521 928 A 1, EP 0 522 420 A 1, EP 0 522 419 A 1, EP 0 649 865 A 1, EP 0 536 712 A 1, EP 0 596 460 A 1, EP 0 596 461 A 1, EP 0 584 818 A 1,EP0669356A 1, EP 0 634 431 A 1, EP 0 678 536 A 1, EP 0 354 261 A 1, EP 0 424 705 A 1, WO 97/49745, WO 97/49747, EP 0 401 565 A 1 oder EP 0 817 684, Spalte 5, Zeilen 31 bis 45, EP 0 708 788 A 1, DE 44 01 544 A 1 oder DE 195 34 361 A 1 beschrieben.

Beispiele besonders gut geeigneter Polyurethane und Polyurethandispersionen mit funktionellen Gruppen (A) und (B) werden in den nicht vorveröffentlichten deutschen Patentanmeldungen DE 199 47 054.5 oder DE 199 58 726.4 beschrieben.

Die Polyurethane sind aus aliphatischen Polyisocyanaten, Verbindungen mit isocyanatreaktiven funktionellen Gruppen sowie mit aktinischer Strahlung aktivierbaren Bindungen, niedermolekularen aliphatischen Verbindungen mit isocyanatreaktiven funktionellen Gruppen, Verbindungen mit isocyanatreaktiven funktionellen Gruppen und dispergierenden funktionellen Gruppen, Neutralisationsmittel für die dispergierenden funktionellen Gruppen, Blockierungsmitteln für Isocyanatgruppen und/oder Verbindungen mit blockierten Isocyanatgruppen aufgebaut, wobei die blockierten Isocyanatgruppen über die Umsetzung der Blockierungsmittel mit isocyanatgruppenhaltigen Polyurethanpräpolymeren in die Polyurethandispersion eingeführt werden.

Vorzugsweise wird mindestens ein aliphatisches, inklusive cycloaliphatisches, Polyisocyanat mit einer Isocyanatfunktionalität von 2, 0 bis 6,0, vorzugsweise 2,0 bis 5,0, bevorzugt mit 2,0 bis 4,5 und insbesondere 2,0 bis 3,5. Im Rahmen der vorliegenden Erfindung bezeichnet der Begriff "cycloaliphatisches Diisocyanat" ein Diisocyanat, worin mindestens eine Isocyanatgruppe an einen cycloaliphatischen Rest gebunden ist.

Beispiele geeigneter cycloaliphatischer Polyisocyanate mit einer Isocyanatfunktionalität von 2,0 sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan Dicyclohexylmethan-2,4'-diisocyanat oder Dicyclohexylmethan-4,4'-diisocyanat, insbesondere Isophorondiisocyanat.

Beispiele geeigneter acyclischer aliphatischer Diisocyanate mit einer Isocyanat Funktionalität von 2,0 sind Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan.

Von diesen ist Hexamethylendiisocyanat von besonderem Vorteil und wird deshalb erfindungsgemäß ganz besonders bevorzugt verwendet.

Beispiele geeigneter Polyisocyanate mit einer Isocyanatfunktionalität >2 sind Polyisocyanate, insbesondere auf der Basis von Hexamethylendiisocyanat, die Isocyanurat-, Biuret-, Allophanat-, Iminooxadiazindion-, Urethan-, Harnstoff-Carbodiimid und/oder Uretdiongruppen aufweisen und die in üblicher und bekannter Weise aus den vorstehend beschriebenen Diisocyanaten erhältlich sind. Hiervon sind die allophanatgruppenhaltigen von Vorteil und werden deshalb erfindungsgemäß besonders bevorzugt verwendet. Beispiel geeigneter Herstellungsverfahren und Polyisocyanate sind beispielsweise aus dem Patentschriften CA 2,163,591 A, US 4,419,513 A, US 4,454,317 A, EP 0 646 608 A 1, US 4,801,675 A, EP 0 183 976 A 1, DE 40 15 155 A 1, EP 0 303 150 A 1, EP 0 496 208 A 1, EP 0 524 500 A 1, EP 0 566 037 A 1, US 5,258,482 A, US 5,290,902 A, EP 0 649 806 A 1, DE 42 29 183 A 1 oder EP 0 531 820 A 1 bekannt.

Beispiele geeigneter Verbindungen mit mindestens einer, insbesondere einer, funktionellen Gruppe sowie mindestens einer mit aktinischer Strahlung aktivierbaren Bindung pro Molekül sind
- Allylalkohol.oder 4-Butylvinylether;
- Hydroxyalkylester der Acrylsäure oder der Methacrylsäure, insbesondere der Acrylsäure, die durch Veresterung aliphatischer Diole, beispielsweise der vorstehend beschriebenen niedermolekularen Diole B), mit Acrylsäure oder Methacrylsäure oder durch Umsetzung von Acrylsäure oder Methacrylsäure mit einem Alkylenoxid erhältlich sind, insbesondere Hydroxyalkylester der Acrylsäure oder Methacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutyl-, Bis(hydroxymethyl)cyclohexanacrylat oder - methacrylat; von diesen sind 2-Hydroxyethylacrylat und 4-Hydroxybutylacrylat besonders vorteilhaft und werden deshalb erfindungsgemäß besonders bevorzugt verwendet; oder
- Umsetzungsprodukte aus cyclischen Estern, wie z.B. epsilon-Caprolacton, und diesen Hydroxyalkyl- oder -cycloalkylestern.

Beispiele geeigneter niedermolekularer aliphatischer Verbindungen mit mindestens zwei, insbesondere zwei, isocyanatreaktiven funktionellen Gruppen sind Polyole, insbesondere Diole, Polyamine, insbesondere Diamine, und Aminoalkohole. Üblicherweise werden die Polyole und/oder Polyamine neben den Diolen und/oder Diaminen in untergeordneten Mengen verwendet, um Verzweigungen in die Polyurethane einzuführen. Im Rahmen der vorliegenden Erfindung sind unter untergeordneten Mengen Mengen zu verstehen, die kein Gelieren der Polyurethane bei ihrer Herstellung bewirken. Für die Aminoalkohole gilt dies sinngemäß

Beispiele geeigneter Diole sind Ethylenglykol, 1,2- oder 1,3-Propandiol; 1,2-, 1,3-oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol, die stellungsisomeren Diethyloctandiole, 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3, 2-Cyclohexyl-2-methylpropandiol-1,3, 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, Dihydroxymethylcyclohexan, Bis(hydroxycyclohexyl)propan, Tetramethylcyclobutandiol, Cyclooctandiol oder Norbonandiol.

Beispiele geeigneter Polyole sind Trimethylolethan, Trimethylolpropan oder Glycerin, Pentaerythrit oder Homopentaerythrit oder Zuckeralkohole wie Threit oder Erythrit oder Pentite wie Arabit, Adonit oder Xylit oder Hexite wie Sorbit, Mannit oder Dulcit.

Beispiele geeigneter Diamine sind Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin oder 4,4'-Diaminodicyclohexylmethan.

Beispiele geeigneter Polyamine sind Diethylentriamin, Triethylentetramin, Dipropylendiamin und Dibutylentriamin.

Beispiele geeigneter Aminoalkohole sind Ethanolamin, Diethanolamin oder Triethanolamin.

Von diesen Verbindungen bietet Diethanolamin besondere Vorteile und wird deshalb erfindungsgemäß bevorzugt verwendet.

Beispiele geeigneter Verbindungen mit mindestens einer isocyanatreaktiven funktionellen Gruppe und mindestens einer dispergierenden funktionellen Gruppe, insbesondere einer (potentiell) anionischen Gruppe, sind Mercapto-, Hydroxy -, Amino-oder Iminobcarbonsäuren, -phosphonsäuren oder -sulfonsäuren wie Mercaptoessigsäure (Thioglykolsäure), Mercaptopropionsäure, Mercaptobemsteinsäure, Hydroxyessigsäure, Hydroxydecansäure, Hydroxydodecansäure, 12-Hydroxystearinsäure, Hydroxyethansulfonsäure, Hydroxypropansulfonsäure, Mercaptoethansulfonsäure, Mercaptopropansulfonsäure, Aminopropansulfonsäure, Glycin, Iminodiessigsäure, 2,2-Dimethylolessigsäure, 2,2-Dimethylolpropionsäure, 2,2-Dimethylolbuttersäure, 2,2-Dimenthylolpentansäure, ###,###-Diaminovaleriansäure, 3,4-Diaminobenzoesäure, 2,4-Diaminotoluolsulfonsäure oder 2,4-Diamino-diphenylethersulfonsäure. Sie werden in Mengen verwendet, daß die vorstehend beschriebenen Säurezahlen resultieren.

Beispiele für geeignete Neutralisationsmittel für die potentiell anionischen Gruppen der vorstehend beschriebenen Verbindung sind Alkali- und Erdalkalihydroxide, -oxide, -carbonate, oder -hydrogencarbonate sowie Ammoniak oder Amine, wie z.B. Trimethylamin, Triethylamin, Tributylamin, Dimethylanilin, Diethylanilin, Triphenylamin, Dimethylethanolamin, Diethylethanolamin, Methyldiethanolamin, 2-Aminomethylpropanol, Dimethylisopropylamin oder Dimethylisopropanolamin.

Beispiele geeigneter Blockierungsmittel sind
i) Phenole wie Phenol, Cresol, Xylenol, Nitrophenol, Chlorophenol, Ethylphenol, tert.-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, insbesondere Dimethylpyrazol oder Triazole; sowie
xvii) Gemische dieser Blockierungsmittel, insbesondere Dimethylpyrazol und Triazole, Malonester und Acetessigsäureester oder Dimethylpyrazol und Succinimid.

Beispiele geeigneter Verbindungen, die von den vorstehend beschriebenen Verbindungen, die keine Polyisocyanate sind, verschieden sind und eine isocyanatreaktive funktionelle Gruppe aufweisen, sind Ethanol, Propanol, n-Butanol, sec.-Butanol, tert.-Butanol, Amylalkohole, Hexanole, Fettalkohole, Phenol, Allylalkohol oder Ethylhexylamin. Sie werden vorzugsweise i. V. m. höherfunktionellen Verbindungen verwendet, insbesondere um das Gelieren der Polyurethane bei ihrer Herstellung zu vermeiden.

Bei den erfindungsgemäßen Stoffgemischen I sind indes diese Polyurethandispersionen als Bestandteile ausgenommen.

Darüber hinaus kommen als Bestandteile, die mindestens eine funktionelle Gruppe (A) enthalten, die in den den europäischen Patentanmeldungen EP 0 928 800 A 1, EP 0 636 669 A 1, EP 0 410 242 A 1, EP 0 783 534 A 1, EP 0 650 978 A 1, EP 0 650 979 A 1, EP 0 650 985 A 1, EP 0 540 884 A 1, EP 0 568 967 A 1, EP 0 054 505 A 1 oder EP 0 002 866 A 1, den deutschen Patentanmeldungen DE 197 09 467 A 1, DE 42 03 278 A 1, DE 33 16 593 A 1, DE 38 36 370 A 1, DE 24 36 186 A 1 oder DE 20 03 579 B 1, den internationalen Patentanmeldungen WO 97/46549 oder WO 99/14254 oder den amerikanischen Patentschriften US 5,824,373 A, US 4,675,234 A, US 4,634,602 A, 4,424,252 A, US 4,208,313 A, US 4,163,810 A, US 4,129,488 A, US 4,064,161 A oder US 3,974,303 A beschriebenen; zur Verwendung in UV-härtbaren Klarlacken und Pulverklarlacken vorgesehenen Bindemittel in Betracht.

Der Gehalt der vorstehend beschriebenen oligomere und polymeren Bestandteile, d. h. der Bindemittel, kann sehr breit variieren und richtet sich insbesondere nach ihrer Funktionalität und danach, ob sie thermisch selbst- oder fremdvernetzend sind. Im Falle thermisch selbstvernetzender Bestandteile kann der Gehalt bis zu 100 Gew.-%, bezogen auf den Festkörper der erfindungsgemäßen Stoffgemische, betragen. Werden thermisch fremdvernetzende Bestandteile verwendet, liegt der Gehalt, bezogen auf den Festkörper der erfindungsgemäßen Stoffgemische, vorzugsweise bei 20 bis 90, bevorzugt 25 bis 85, besonders bevorzugt 30 bis 80, ganz besonders bevorzugt 35 bis 75 und insbesondere 40 bis 70 Gew.-%.

Bei den niedermolekularen Bestandteilen handelt es sich insbesondere um thermisch härtbare Reaktivverdünner mit reaktiven funktionellen Gruppen (B) wie stellungsisomere Diethyloctandiole oder Hydroxylgruppen enthaltende hyperverzweigte Verbindungen oder Dendrimere wie sie in den deutschen Patentanmeldungen DE 198 05 421 A 1, DE 198 09 643 A 1 oder DE 198 40 405 A 1 beschrieben werden oder um mit aktinischer Strahlung härtbare Reaktivverdünner mit funktionellen Gruppe (A) , wie die in Römpp Lexikon Lacke und Druckfarben, Georg Thieme Verlag, Stuttgart, New York, 1998, auf Seite 491 unter dem Stichwort »Reaktivverdünner« beschriebenen.

Desweiteren handelt es sich bei den niedermolekularen Bestandteilen um Vernetzungsmittel mit komplementären reaktiven funktionellen Gruppen (B) wie
- Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A oder EP 0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden,
- Carboxylgruppen enthaltende Verbindungen oder Harze, wie sie beispielsweise in der Patentschrift DE 196 52 813 A 1 oder 198 41 408 A 1 beschrieben werden, insbesondere 1,12-Dodecandisäure,
- Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A oder US 3,781,379 A beschrieben werden,
- blockierte Polyisocyanate, wie sie beispielsweise in den Patentschriften US 4,444,954 A, DE 196 17 086 A 1, DE 196 31 269 A 1, EP 0 004 571 A 1 oder EP 0 582 051 A 1 beschrieben werden,
- beta-Hydroxyalkylamide wie N,N,N',N'-Tetrakis(2-hydroxyethyl)adipamid oder N,N,N',N'-Tetrakis(2-hydroxypropyl)-adipämid und/oder
- Tris(alkoxycarbonylamino)-triazine, wie sie in den Patentschriften US 4,939,213 A 1, US 5,084,541 A, US 5,288,865 A oder EP 0 604 922 A 1 beschrieben werden.

Außerdem handelt es sich bei den niedermolekularen Bestandteilen um Vernetzungsmittel, die funktionelle Gruppen (A) und (B) enthalten, wie sie beispielsweise in der europäischen Patentanmeldungen EP 0 928 800 A 1 beschrieben werden.

Der Gehalt der erfindungsgemäßen Stoffgemische I und II an niedermolekularen Bestandteilen kann breit variieren und richtet sich vor allem nach deren Funktionalität und Funktion. Beispielsweise enthalten die erfindungsgemäße Stoffgemische I und II, jeweils bezogen auf ihren Festkörper, 10 bis 80, bevorzugt 15 bis 75, besonders bevorzugt 20 bis 70, ganz besonders bevorzugt 25 bis 65 und insbesondere 30 bis 60 Gew.-% der vorstehend beschriebenen Vemetzungsmittel.

Die Stoffgemische I und II können den unterschiedlichsten Verwendungszwecken zugeführt werden. Insbesondere werden sie als Beschichtungsstoffen, Klebstoffe und Dichtungsmassen oder zu deren Herstellung verwendet.

Die erfindungsgemäß hergestellten Beschichtungsstoffe, Klebstoffe und Dichtungsmassen sind Einkomponentensysteme oder Mehrkomponentensysteme. Bei den erfindungsgemäßen Einkomponentensystemen können alle Bestandteilen zusammen gelagert werden, ohne daß hierbei die Gefahr einer vorzeitigen Vernetzung besteht. Bei den erfindungsgemäßen Mehrkomponentensystemen muß wegen der hohen Reaktivität zumindest ein Bestandteil getrennt von übrigen gelagert werden, um eine vorzeitige Vernetzung zu vermeiden. Der reaktive Bestandteil wird daher den übrigen Bestandteilen erst kurz vor der Applikation des Beschichtungsstoffs, des Klebstoffs oder der Dichtungsmasse zugesetzt.

Die Stoffgemische I und II bzw. die erfindungsgemäßen Beschichtungsstoffe, Klebstoffe und Dichtungsmassen sind lösemittelhaltige (konventionelle) oder wäßrige Systeme, im wesentlichen wasser- und lösemittelfreie flüssige (100%-Systeme) oder feinteilige feste (Pulverlacke) Systeme oder wäßrige Dispersionen von Pulverlacken (Pulverslurries).

Besondere Vorteile weisen die erfindungsgemäßen Stoffgemische I und II bei ihrer Verwendung als Beschichtungsstoffe auf. Dabei kann es sich um einen pigmentierten oder einen nicht pigmentierten Beschichtungsstoff handeln. Beispiele für pigmentierte Beschichtungsstoffe sind Füller, Unidecklacke oder Basislacke; Beispiele für nicht pigmentierte Beschichtungsstoffe sind Klarlacke. Besonders bevorzugt werden die erfindungsgemäßen Stoffgemische I und II als Klarlacke oder zur Herstellung von Klarlacken, vorzugsweise Mehrkomponentenklarlacke, insbesondere Zweikomponentenklarlacke, verwendet.

Wird der Beschichtungsstoff als Füller, Unidecklack oder Basislack verwendet, enthält er als Zusatzstoffe farb- und/oder effektgebende Pigmente in üblichen und bekannten Mengen. Die Pigmente können aus anorganischen oder organischen Verbindungen bestehen und können effekt- und/oder farbgebend sein. Der erfindungsgemäße Dual-Cure-Beschichtungsstoff gewährleistet daher aufgrund dieser Vielzahl geeigneter Pigmente eine universelle Einsatzbreite der Dual-Cure-Beschichtungsstoffe und ermöglicht die Realisierung einer Vielzahl von Farbtönen und optischer Effekte.

Als Effektpigmente können Metallplättchenpigmente wie handelsübliche Aluminiumbronzen, gemäß DE 36 36 183 A 1 chromatierte Aluminiumbronzen, und handelsübliche Edelstahlbronzen sowie nichtmetallische Effektpigmente, wie zum Beispiel Perlglanz- bzw. Interferenzpigmente, eingesetzt werden. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende Pigmente sind Titandioxid, Eisenoxide, Sicotransgelb und Ruß. Beispiele für geeignete organische farbgebende Pigmente sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentsvolumenkonzentration«, Seite 563 »Thioindigo-Pigmente« und Seite 567 »Titandioxid-Pigmente« verwiesen.

Desweiteren kann der Dual-Cure-Beschichtungsstoff, insbesondere als Füller, organische und anorganische Füllstoffe in üblichen und bekannten, wirksamen Mengen enthalten. Beispiele für geeignete Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Holzmehl. Ergänzend wird auf Römpp Lexikon Lacke und Druckfarben, Georg Thieme Verlag, 1998, Seiten 250 ff., »Füllstoffe«, verwiesen.

Diese Pigmente und Füllstoffe können auch über Pigmentpasten in die Dual-Cure-Beschichtungsstoffe eingearbeitet werden.

Die vorstehend beschriebenen Pigmente und Füllstofffe entfallen, wenn die Beschichtungsstoffe in ihrem ganz besonders bevorzugten Verwendungszweck als Klarlacke verwendet werden.

Beispiele geeigneter Zusatzstoffe, welche sowohl in den Klarlacken, Füllern, Basislacken und Unidecklacken vorhanden sein können, sind
- niedrig siedende und/oder hochsiedende organische Lösemittel ("lange Lösemittel");
- UV-Absorber wie Benztriazole Hydroxyphenyltriazine und/oder Oxalanilide und/oder weitere Lichtschutzmittel wie HALS-Verbindungen wie N-Methyl- oder N-Aminoether-2,2,6,6-Tetramethylpiperidinylester;
- Antioxidantien;
- Photoinitiatoren wie solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon Lacke und Druckfarben, Georg Thieme Verlag Stuttgart, 1998, Seiten 444 bis 446, verwiesen), insbeondere Benzophenone, Benzoine oder Benzoinether oder Phosphinoxide;
- zusätzliche thermolabile radikalische Initiatoren wie organische Peroxide oder organische Azoverbindungen wie Dialkylperoxide, Peroxocarbonsäuren, Peroxodicarbonate, Peroxidester, Hydroperoxide, Ketonperoxide oder Azodinitrile;
- Katalysatoren für die Vernetzung wie Dibutylzinndilaurat, Dibutylzinndioleat, Lithiumdecanoat, Bismutlactat oder - dimethylpropionat oder Zinkoctoat oder starke Säuren wie Sulfonsäuren, die gegebenenfalls mit Aminen blockiert sind;
- Entlüftungsmittel, wie Diazadicycloundecan;
- Slipadditive;
- Polymerisationsinhibitoren;
- Entschäumer;
- Emulgatoren, insbesondere nicht ionische Emulgatoren wie alkoxylierte Alkanole, Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen, Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- transparente Füllstoffe auf der Basis von Siliziumdioxid, Aluminiumoxid oder Zirkoniumoxid; ergänzend wird noch auf das Römpp Lexikon Lacke und Druckfarben, Georg Thieme Verlag, Stuttgart, 1998, Seiten 250 bis 252, verwiesen; die Füllstoffe können auch als Nanopartikel vorliegen, wobei sie vorzugsweise in den vorstehend beschriebenen Reaktiverdünnern für die Härtung mit aktinischer Strahlung dispergiert sind;
- Sag control agents wie Harnstoffe, modifizierte Harnstoffe und/oder Kieselsäuren, wie sie beispielsweise in den Literaturstellen EP 192 304 A 1, DE 23 59 923 A 1, DE 18 05 693 A 1, WO 94/22968, DE 27 51 761 C 1, WO 97/12945 oder "farbe + lack", 11/1992, Seiten 829 ff., beschrieben werden;
- rheologiesteuernde Additive, wie die aus den Patentschriften WO 94/22968, EP 0 276 501 A 1, EP 0 249 201 A 1 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;
- Flammschutzmittel und/oder
- Mattierungsmittel wie Magnesiumstearat.

Weitere Beispiele geeigneter Zusatzstoffe werden in dem Lehrbuch »Lackadditive« von Johan Bieleman, Wiley-VCH, Weinheim, New York, 1998, beschrieben.

Die vorstehend beschriebenen Zusatzstoffe können auch in den erfindungsgemäßen Klebstoffen und Dichtungsmassen vorhanden sein, sofern sie sich für diese Verwendungszwecke eignen, was der Fachmann anhand seines allgemeinen Fachwissens leicht feststellen kann.

Die Herstellung der erfindungsgemäßen Stoffgemische I und II bzw. der erfmdungsgemäßen Beschichtungsstoffen, Klebstoffe und Dichtungsmassen weist keine Besonderheiten auf, sondern erfolgt in üblicher und bekannter Weise durch Vermischen der vorstehend beschriebenen Bestandteile in geeigneten Mischaggregaten wie Rührkessel, Dissolver, Rührwerksmühlen oder Extruder nach den für die Herstellung der jeweiligen erfindungsgemäßen Beschichtungsstoffen, Klebstoffen oder Dichtungsmassen geeigneten Verfahren.

Die erfindungsgemäßen Klebstoffe dienen der Herstellung der erfindungsgemäßen Klebschichten auf grundierten und ungrundierten Substraten.

Die erfindungsgemäßen Dichtungsmassen dienen der Herstellung der erfindungsgemäßen Dichtungen auf und/oder in grundierten und ungrundierten Substraten.

Die erfmdungsgemäßen Beschichtungsstoffe dienen der Herstellung ein- oder mehrschichtiger Klarlackierungen und/oder farb- und/oder effektgebender Mehrschichtlackierungen auf grundierten und ungrundierten Substraten. Die erfindungsgemäßen Beschichtungsstoffe erweisen sich gerade bei dieser Verwendung als besonders vorteilhaft. Ganz besondere Vorteile resultieren bei ihrer Verwendung zur Herstellung von Klarlackierungen, insbesondere im Rahmen des sogenannten Naß-in-naß-Verfahrens, bei dem ein Basislack, insbesondere ein Wasserbasislack, auf das grundierte oder ungrundierte Substrat appliziert und getrocknet, indes nicht gehärtet wird, wonach man auf die Basislackschicht einen Klarlack appliziert und die resultierende Klarlackschicht gemeinsam mit der Basislackschicht thermisch und mit aktinischer Strahlung härtet.

Als Substrate kommen alle zu lackierenden Oberflächen, die durch eine Härtung der hierauf befindlichen Schichten unter der kombinierten Anwendung von Hitze und aktinischer Strahlung nicht geschädigt werden, in Betracht.

Geeignete Subtrate bestehen aus Metallen, Kunststoffen, Holz, Keramik, Stein, Textil, Faserverbunden, Leder, Glas, Glasfasern, Glas- und Steinwolle, mineral-und harzgebundenen Baustoffen, wie Gips- und Zementplatten oder Dachziegel, sowie Verbunden dieser Materialien.

Demnach sind die erfmdungsgemäßen Lackierungen, Klebschichten oder Dichtungen auch für Anwendungen außerhalb der Automobilerstlackierung und der Autoreparaturlackierung geeignet. Hierbei kommen sie insbesondere für die Lackierung, das Verkleben und/oder das Abdichten von Möbeln, Fenstern und Türen, von Bauwerken im Innen- und Außenbereich und für die industrielle Lackierung, inklusive Coil Coating, Container Coating und die Imprägnierung oder Beschichtung elektrotechnischer Bauteile, in Betracht. Im Rahmen der industriellen Lackierung eignen sie sich für die Lackierung, das Verkleben und/oder das Abdichten praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert, geklebt oder abgedichtet werden. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die Applikation der Beschichtungsstoffe, -Klebstoffe und -Dichtungsmassen, insbesondere der Beschichtungsstoffe, kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air- Heißspritzen. Die Applikationen kann bei Temperaturen von max. 70 bis 80°C durchgeführt werden, so daß geeignete Applikationsviskositäten erreicht werden, ohne daß bei der kurzzeitig einwirkenden thermischen Belastung eine Veränderung oder Schädigungen des Beschichtungsstoffs und seines gegebenenfalls wiederaufzubereitenden Overspray eintreten. So kann das Heißspritzen so ausgestaltet sein, daß der Dual-Cure- Beschichtungsstoff nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Beschichtungsstoff selbst, betrieben wird.

Bevorzugt wird die Applikation bei Beleuchtung mit sichtbarem Licht einer Wellenlänge von über 550 nm oder unter Lichtausschluß durchgeführt. Hierdurch werden eine stoffliche Änderung oder Schädigung des Dual-Cure-Beschichtungsstoffs und des Overspray vermieden.

Im allgmeinen werden die Füllerlackschicht, Unidecklackschicht, Basislackschicht und Klarlackschicht in einer Naßschichtdicke appliziert, daß nach ihrer Aushärtung Schichten mit der für ihre Funktionen notwendigen und vorteilhaften Schichtdicken resultieren. Im Falle der Füllerschicht liegt diese Schichtdicke bei 10 bis 150, vorzugsweise 15 bis 120, besonders bevorzugt 20 bis 100 und insbesondere 25 bis 90 µm, im Falle der Unidecklackierung liegt sie bei 5 bis 90, vorzugsweise 10 bis 80, besonders bevorzugt 15 bis 60 und insbesondere 20 bis 50 µm, im Falle der Basislackierung liegt sie bei 5 bis 50, vorzugsweise 6 bis 40, besonders bevorzugt 7 bis 30 und insbesondere 8 bis 25 µm, und im Falle der Klarlackierungen liegt sie bei 10 bis 100, vorzugsweise 15 bis 80, besonders bevorzugt 20 bis 70 und insbesondere 25 bis 60 µm.

Die Aushärtung kann nach einer gewissen Ruhezeit erfolgen. Sie kann eine Dauer von 30 s bis 2 h, vorzugsweise 1 min bis 1 h und insbesondere 1 min bis 30 min haben. Die Ruhezeit dient beispielsweise zum Verlauf und zur Entgasung der applizierten Schichten oder zum Verdunsten von flüchtigen Bestandteilen wie Lösemittel oder Wasser. Die Ruhezeit kann durch die Anwendung erhöhter Temperaturen bis 80°C unterstützt und/oder verkürzt werden, sofern hierbei keine Schädigungen oder Veränderungen der applizierten Schichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Die thermische Härtung kann auch stufenweise erfolgen. Vorteilhafterweise erfolgt sie bei einer Temperatur > 100 °C, bevorzugt 110 bis 200 °C, besonders bevorzugt 120 bis 190°C und insbesondere 130 bis 180 °C während einer Zeit von 1 min bis zu 2 h, besonders bevorzugt 2 min bis zu 1 h und insbesondere 3 min bis 30 min.

Die aus den erfindungsgemäß hergestellten Klebstoffen und -Dichtungsmassen hergestellten Klebschichten und Dichtungen haben auch unter extremen und/oder rasch wechselnden klimatischen Bedingungen eine hervorragende Klebkraft und Dichtungsfähigkeit auch über lange Zeiträume hinweg.

Die aus den erfindungsgemäßen Beschichtungsstoffen hergestellten erfindungsgemäßen Beschichtungen weisen einen hervorragenden Verlauf und einen hervorragenden optischen Gesamteindruck auf. Sie sind witterungsstabil und vergilben auch im tropischen Klima nicht. Sie sind daher im Innen- und Außenbereich verwendbar.

Die mit Hilfe der Beschichtungsstoffe hergestellten farb- und/oder effektgebenden Mehrschichtlackierungen sind, was Farbe, Effekt, Glanz und D.O.I. (distinctiveness of the reflected image) betrifft, von höchster optischer Qualität, haben eine glatte, strukturfreie, harte, flexible, kratzfeste und abriebfeste Oberfläche, sind witterungs-, chemikalien- und etch-beständig, sie vergilben nicht und zeigen keine Rißbildung und Delamination der Schichten.

ZusätzlicheVorteile, wie etwa ein besonders hoher Glanz, resultieren, wenn die Beschichtungen nach ihrer Herstellung mit aktinischer Strahlung bestrahlt werden.

Daher weisen auch die erfindungsgemäßen grundierten und ungrundierten Substrate, insbesondere Karosserien von Automobilen und Nutzfahrzeugen, industrielle Bauteile, inklusive Kunstsstoffteile, Emballagen, Coils und elektrische Bauteile, oder Möbel, die mit mindestens einer erfindungsgemäßen Beschichtung beschichtet, mindestens einer erfindungsgemäßen Dichtung abgedichtet und/oder mit mindestens einem erfindungsgemäßen Klebstoff verklebt sind, besondere technische und wirtschaftliche Vorteile, insbesondere eine lange Gebrauchsdauer auf, was sie für die Anwender besonders attraktiv macht.

### Beispiele

### Herstellbeispiel 1

### Die Herstellung eines Bindemittels (B)

In einen Laborreaktor mit einem Nutzvolumen von 4 1, der mit einem Rührer, einem Tropftrichter für den Monomerzulauf und einem Tropftrichter für den Initiatorzulauf, Stickstoffeinleitungsrohr, Thermometer und Rückflußkühler ausgestattete war, wurden 650 Gewichtsteile einer Fraktion aromatischer Kohlenwasserstoffe mit einem Siedebereich von 158 bis 172°C vorgelegt. Das Lösemittel wurde auf 140°C aufgeheizt, wonach bei dieser Temperatur unter Rühren eine Monomermischung aus 652 Gewichtsteilen Ethylhexylacrylat, 383 Gewichtsteilen Hydroxyethylmethacrylat, 143 Gewichtsteilen Styrol, 213 Gewichtsteilen 4-Hydroxybutylacrylat und 21 Gewichtsteilen Acrylsäure während vier Stunden und eine Initiatorlösung aus 113 Gewichtsteilen tert.-Butylperethylhexanoat und 113 Gewichtsteilen des aromatischen Lösemittels während viereinhalb Stunden gleichmäßig zudosiert wurden. Mit den Zuläufen wurde gleichzeitig begonnen. Nach der Beendigung des Initiatorzulaufs wurde die Redaktionsmischung während zwei Stunden bei 140°C gehalten und danach abgekühlt. Die Reaktionsmischung wurde mit einer Mischung aus 1-Methoxypropylacetat-2, Butylglykolacetat und Butylacetat verdünnt. Die resultierende Bindemittellösung wies einen Festkörpergehalt von 65 Gew.-% (1 h /130°C) und eine Säurezahl von 15 mg KOH/g auf.

### Beispiel 1

### Die Herstellung eines erfindungsgemäßen Zweikomponentenklarlack

Die Bindemittelkomponente des erfindungsgemäßen Zweikomponentenklarlacks wurde durch Vermischen von 35,9 Gewichtsteilen der Bindemittellösung des Herstellbeispiels 1, 20,0 Gewichtsteilen Dipentaerythritolpentaacrylat (Sartomer® 399 der Firma Cray Valley), 1,3 Gewichtsteilen Gewichtsteilen eines substituierten Hydroxyphenyltriazins (65%-ig in Toluol), 1,0 Gewichtsteilen N-Aminoether-2,2,6,6-tetramethyl-piperidinylester (Tinuvin® 123 der Firma Ciba Specialty Chemicals), 0,4 Gewichtsteilen BYK® 306 (handelsübliches Verlaufmittel der Firma Byk Chemie), 27,4 Gewichtsteilen Butylacetat, 10 Gewichtsteile Solventnaphtha und 3,0 Gewichtsteilen ADDID® 600 (Benzpinakolsilylether der Firma Wacker Chemie) hergestellt.

Die Bindemittelkomponente wurde mit einem Isocyanatoacrylat (Roskydal® UA VPLS 2337; Gehalt an Isocyanatgruppen: 12 Gew.-%; Firma Bayer AG) im Gewichtsverhältnis von 100: 30 gemischt.

Der resultierende spritzfertige Klarlack wies eine Viskosität von 19 Sekunden im DIN4-Auslaufbecher auf.

### Beispiel 2

### Die Herstellung einer erfindungsgemäßen Mehrschichtlackierung

Zur Herstellung der Mehrschichtlackierung wurden Prüftafeln aus Stahl, die mit einer Elektrotauchlackierung einer Trockenschichtdicke von 18 bis 22 µm beschichtet waren, mit einem Wasserfüller beschichtet. Die resultierende Wasserfüllerschicht wurde während 20 Minuten bei 160°C eingebrannt, so daß eine Füllerlackierung einer Trockenschichtdicke von 35 bis 40 µm resultierte. Die Füllerlackierung wurde anschließend mit einem schwarzen Wasserbasislack in einer Schichtdicke von 12 bis 15 µm beschichtet, und die resultierende Wasserbasislackschichten wurde während 10 Minuten bei 80°C abgelüftet. Hiernach wurde der Klarlack des Beispiels 1 in einer Schichtdicke von 40 bis 45 µm in einem Kreuzgang mit einer Fließbecherpistole pneumatisch appliziert. Anschließend wurden die Basislackschicht und die Klarlackschicht während 20 Minuten bei 140°C in einem Umluftofen gehärtet.
Die erfindungsgemäße Mehrschichtlackierung wies einen Glanz nach DIN 67530 von 88,8 und eine Mikroeindringhärte von 78 N/mm² (Universalhärte bei 25,6 mN, Fischersope 100 V mit Diamantpyramide nach Vickers).

Die Kratzfestigkeit der Mehrschichtlackierung wurden nach dem Sandtest bestimmt. Hierzu wurde die Lackoberfläche mit Sand belastet (20g Quarz-Silbersand 1,5-2,0 mm). Der Sand wurde in einen Becher (Boden plan abgeschnitten) gegeben, der fest auf der Prüftafel befestigt wurde. Mittels eines Motorantriebes wurde die Tafel mit dem Becher und dem Sand in Schüttelbewegungen versetzt. Die Bewegung des losen Sandes verursachte dabei die Beschädigung der Lackoberfläche (100 Doppelhübe in 20 s). Nach der Sandbelastung wurde die Prüffläche vom Abrieb gereinigt, unter einem kalten Wasserstrahl vorsichtig abgewischt und anschließend mit Druckluft getrocknet. Gemessen wurde der Glanz nach DIN 67530 vor und nach Beschädigung (Meßrichtung senkrecht zur Kratzrichtung):

| | |
|---|---|
| Anfang: | 89,2 |
| nach Schädigung: | 79 |

Außerdem wurde die Kratzfestigkeit noch nach dem Bürstentest bestimmt. Für diesen Test wurden die Prüftafeln mit der Mehrschichtlackierung mindestens 2 Wochen bei Raumtemperatur gelagert, bevor die Prüfung durchgeführt wurde.

Die Kratzfestigkeit wurde mit Hilfe des in Fig. 2 auf Seite 28 des Artikels von P. Betz und A. Bartelt, Prtigress in Organic Coatings, 22 (1993), Seiten 27 - 37, beschriebenen BASF-Bürstentests, der allerdings bezüglich des verwendeten Gewichts (2000 g statt der dort genannten 280 g) abgewandelt wurde, folgendermaßen beurteilt:

Bei dem Test wurde die Lackoberfläche mit einem Siebgewebe, welches mit einer Masse belastet wurde, geschädigt. Das Siebgewebe und die Lackoberfläche wurden mit einer Waschmittel-Lösung reichlich benetzt. Die Prüftafel wurde mittels eines Motorantriebs in Hubbewegungen unter dem Siebgewebe vor- und zurückgeschoben.

Der Prüfkörper war mit Nylon-Siebgewebe (Nr. 11, 31 µm Maschenweite, Tg 50 °C) bespanntes Radiergummi (4,5 x 2,0 cm, breite Seite senkrecht zur Kratzrichtung). Das Auflagegewicht betrug 2000 g.

Vor jeder Prüfung wurde das Siebgewebe erneuert, dabei war die Laufrichtung der Gewebemaschen parallel zur Kratzrichtung. Mit einer Pipette wurde ca. 1 ml einer frisch aufgerührten 0,25%igen Persil-Lösung vor dem Radiergummi aufgebracht. Die Umdrehungszahl des Motors wurde so eingestellt, daß in einer Zeit von 80 s 80 Doppelhübe ausgeführt wurden. Nach der Prüfung wurde die verbleibende Waschflüssigkeit mit kaltem Leitungswasser abgespült, und die Prüftafel wurden mit Druckluft trockengeblasen. Gemessen wurde der Glanz nach DIN 67530 vor und nach Beschädigung (Meßrichtung senkrecht zur Kratzrichtung): ):

| | |
|---|---|
| Anfang: | 88,8 |
| nach Schädigung: | 85 |

Die Versuchsergebnisse belegen die hervorragenden optischen Eigenschaften, die hohe Kratzfestigkeit und hohe Abriebfestigkeit der Mehrschichtlackierung.

## Patentansprüche

1. Verfahren zur Herstellung von Beschichtungen, Klebschichten und Dichtungen basierend auf
einem thermisch härtbaren Stoffgemisch I, enthaltend
(I) mindestens einen Bestandteil, der im statistischen Mittel
(A) mindestens eine funktionelle Gruppe mit mindestens einer Bindung, die thermisch und/oder mit aktinischer Strahlung aktivierbar ist,
und/oder
(B) mindestens eine reaktive funktionelle Gruppe, die mit Gruppen der eigenen Art und/oder mit komplementären reaktiven funktionellen Gruppen thermische Vemetzungsreaktionen eingehen kann,
im Molekül enthält;
mit der Maßgabe, daß stets Gruppen (A) und (B) im Stoffgemisch vorhanden sind;
ausgenommen die Polyurethandispersion, die aus aliphatischen Polyisocyanaten, Verbindungen mit isocyanatreaktiven funktionellen Gruppen sowie mit aktinischer Strahlung aktivierbaren Bindungen, niedermolekularen aliphatischen Verbindungen mit isocyanatreaktiven funktionellen Gruppen, Verbindungen mit isocyanatreaktiven funktionellen Gruppen und dispergierenden funktionellen Gruppen, Neutralisationsmittel für die dispergierenden funktionellen Gruppen, Blockierungsmitteln für Isocyanatgruppen und/oder Verbindungen mit blockierten Isocyanatgruppen aufgebaut ist, wobei die blockierten Isocyanatgruppen über die Umsetzung der Blockierungsmittel mit isocyanatgruppenhaltigen Polyurethanpräpolymeren in die Polyurethandispersion eingeführt werden;
und
(II) 0,5 bis 15 Gew.-%, bezogen auf den Festkörper thermisch härtbare Stoffgemischs, mindestens eines C-C-spaltenden Initiators,
oder basierend auf
einem thermisch härtbaren Stoffgemisch II, enthaltend
(I) mindestens einen Bestandteil, der im statistischen Mittel.
(A) mindestens eine funktionelle Gruppe mit mindestens einer Bindung, die thermisch und/oder mit aktinischer Strahlung aktivierbar ist,
und/oder
(B) mindestens eine reaktive funktionelle Gruppe, die mit Gruppen der eigenen Art und/oder mit komplementären reaktiven funktionellen Gruppen thermische Vernetzungsreaktionen eingehen kann,
im Molekül enthält;
mit der Maßgabe, daß stets Gruppen (A) und (B) im Stoffgemisch vorhanden sind;
und
(II) ein Gemisch aus monomeren und oligomeren Benzpinakolsilylethern,
**dadurch gekennzeichnet, daß**
die thermisch härtbaren Stoffgemische I und/oder 11 rein thermisch gehärtet werden.

2. Verfahren nach Anspruch 1, **dadurch gekennzeichnet, daß** bei dem thermisch härtbaren Stoffgemisch I als C-C-spaltende Initiatoren Benzpinakole verwendet werden.

3. Verfahren nach Anspruch 2, **dadurch gekennzeichnet, daß** Benzpinakolsilylether verwendet werden.

4. Verfahren nach Anspruch 3, **dadurch gekennzeichnet, daß** als Benzpinakolsilylether ein Gemisch aus monomeren und oligomeren Benzpinakolsilylethern verwendet wird.

5. Verfahren nach Anspruch 1, **dadurch gekennzeichnet, daß** bei dem thermisch härtbaren Stoffgemisch II ein Gemisch aus Benzpinakolsilylethern der allgemeinen Formeln I und II 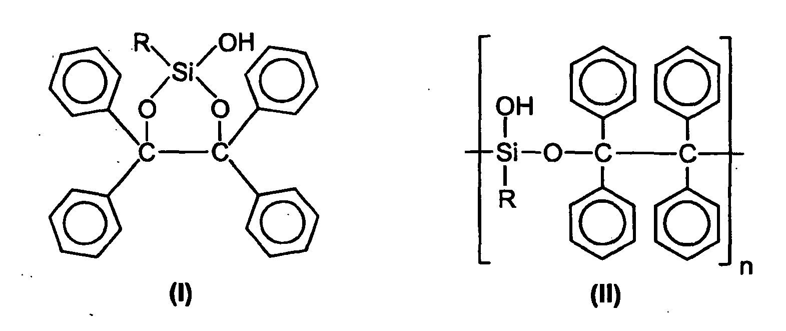 worin die Variable R der allgemeinen Formeln I und II für einen Alkylenrest mit 1 bis 10 Kohlenstoffatomen, einen Cycloalkylrest mit 3 bis 10 Kohlenstoffatomen und/oder einen Aryl Rest mit 6 bis 12 Kohlenstoffatomen steht und worin der Index n der allgemeinen Formel II für eine ganze Zahlen von 2 bis 100 steht, verwendet wird.

6. Verfahren nach einem der Ansprüche 1 bis 5, **dadurch gekennzeichnet, daß** als mit aktinischer Strahlung aktivierbare Bindungen Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen verwendet werden.

7. Verfahren nach einem der Ansprüche 1 bis 6, **dadurch gekennzeichnet, daß** Kohlenstoff-Kohlenstoff-Doppelbindungen verwendet werden.

8. Verfahren nach einem der Ansprüche 1 bis 7, **dadurch gekennzeichnet, daß** die Doppelbindungen als (Meth)Acrylat-, Ethacrylat-, Crotonat-, Cinnamat-, Vinylether-, Vinylester-, Dicyclopentadienyl-, Norbornenyl-, Isoprenyl-, lsoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen vorliegen.

9. Verfahren nach einem der Ansprüche 1 bis 8, **dadurch gekennzeichnet, daß** man als komplementäre reaktive funktionelle Gruppen einerseits Thio-, Hydroxyl-, Amino-, N-Methylolamino- N-Alkoxymethylamino-, Imino-, Carbamat-, Allophanat- und/oder Carboxylgruppen und andererseits Anhydrid-, Epoxy-, blockierte und unblockierte Isocyanat-, Urethan-, Methylol-, Methylolether-, Siloxan-, Carbonat- und/oder beta-Hydroxyalkylamidgruppen verwendet.

10. Verfahren nach einem der Ansprüche 1 bis 9 **dadurch gekennzeichnet, daß** es sich bei den Bestandteilen um niedermolekulare Verbindungen, Oligomere und/oder Polymere handelt.

11. Verfahren nach Anspruch 10, **dadurch gekennzeichnet, daß** es sich bei den Oligomeren und Polymeren um statistisch, alternierend und/oder blockartig aufgebaute lineare und/oder verzweigte und/oder kammartig aufgebaute (Co)Polymerisate von ethylenisch ungesättigten Monomeren, Polyadditionsharze und/oder Polykondensationsharze handelt.

12. Verfahren nach Anspruch 10, **dadurch gekennzeichnet, daß** es sich bei der niedermolekularen Verbindungen um Vernetzungsmittels handelt.

13. Verfahren nach einem der Ansprüche 1 bis 12, **dadurch gekennzeichnet, daß** es mindestens einen Photoinitiatoren enthält.

## Claims

1. Process for preparing coats, adhesive films and seals based on
a heat-curable composition I comprising
(I) at least one constituent whose molecule comprises on average
(A) at least one functional group containing at least one bond which may be activated by means of heat and/or actinic radiation, and/or
(B) at least one reactive functional group which is able to undergo thermal crosslinking reactions with groups of its own kind and/or with complementary reactive functional groups,
with the proviso that there are always groups (A) and (B) in the composition;
said constituent excluding the polyurethane dispersion synthesized from aliphatic polyisocyanates, compounds containing isocyanate-reactive functional groups and containing bonds that may be activated with actinic radiation, low molecular mass aliphatic compounds containing isocyanate-reactive functional groups, compounds containing isocyanate-reactive functional groups and dispersing functional groups, neutralizing agents for the dispersing functional groups, blocking agents for isocyanate groups, and/or compounds containing blocked isocyanate groups, the blocked isocyanate groups being introduced into the polyurethane dispersion by the reaction of the blocking agents with isocyanato-containing polyurethane prepolymers;
and
(II) from 0.5 to 15% by weight, based on the solids of the heat-curable composition, of at least one C-C-cleaving initiator,
or based on
a heat-curable composition II comprising
(I) at least one constituent whose molecule comprises on average
(A) at least one functional group containing at least one bond which may be activated by means of heat and/or actinic radiation, and/or
(B) at least one reactive functional group which is able to undergo thermal crosslinking reactions with groups of its own kind and/or with complementary reactive functional groups,
with the proviso that there are always groups (A) and (B) in the composition;
and
(II) a mixture of monomeric and oligomeric benzpinacol silyl ethers,
wherein the heat-curable compositions I and/or II are cured by means of heat alone.

2. Process according to Claim 1, **characterized in that** benzpinacols are used as C-C-cleaving initiators in the case of the heat-curable composition I.

3. Process according to Claim 2, **characterized in that** benzpinacol silyl ethers are used.

4. Process according to Claim 3, **characterized in that** a mixture of monomeric and oligomeric benzpinacol silyl ethers is used as benzpinacol silyl ethers.

5. Process according to Claim 1, **characterized in that**, in the case of the heat-curable composition II, a mixture of benzpinacol silyl ethers of the general formulae I and II 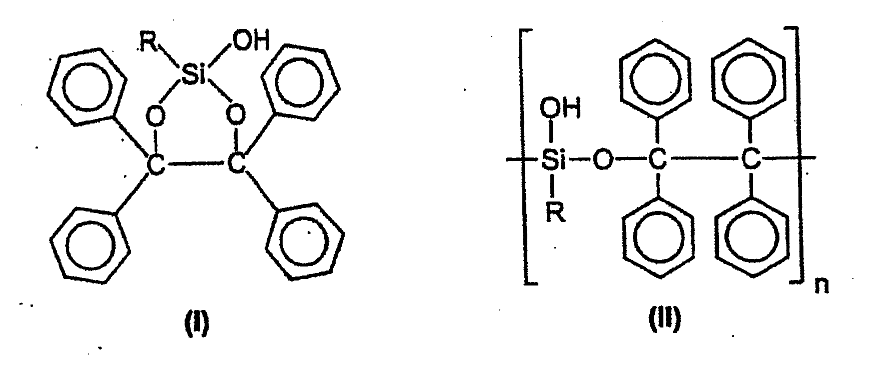 is used in which the variable R of the general formulae I and II is an alkylene radical of 1 to 10 carbon atoms, a cycloalkyl radical of 3 to 10 carbon atoms and/or an aryl radical of 6 to 12 carbon atoms and in which the index n of the general formula II represents an integer from 2 to 100.

6. Process according to any of Claims 1 to 5, **characterized in that** carbon-hydrogen single bonds or carbon-carbon, carbon-oxygen, carbon-nitrogen, carbon-phosphorus or carbon-silicon single bonds or double bonds are used as bonds which may be activated with actinic radiation.

7. Process according to any of Claims 1 to 6, **characterized in that** carbon-carbon double bonds are used.

8. Process according to any of Claims 1 to 7, **characterized in that** the double bonds are present as (meth)acrylate, ethacrylate, crotonate, cinnamate, vinyl ether, vinyl ester, dicyclopentadienyl, norbornenyl, isoprenyl, isopropenyl, allyl or butenyl groups; dicyclopentadienyl ether, norbornenyl ether, isoprenyl ether, isopropenyl ether, allyl ether or butenyl ether groups; or dicyclopentadienyl ester, norbornenyl ester, isoprenyl ester, isopropenyl ester, allyl ester or butenyl ester groups.

9. Process according to any of Claims 1 to 8, **characterized in that** complementary reactive functional groups used comprise on the one hand thio, hydroxyl, amino, N-methylolamino, N-alkoxymethylamino, imino, carbamate, allophanate and/or carboxyl groups and on the other hand anhydride, epoxy, blocked and unblocked isocyanate, urethane, methylol, methylol ether, siloxane, carbonate and/or beta-hydroxyalkylamide groups.

10. Process according to any of Claims 1 to 9, **characterized in that** the constituents comprise low molecular mass compounds, oligomers and/or polymers.

11. Process according to Claim 10, **characterized in that** the oligomers and polymers comprise random, alternating and/or block linear and/or branched and/or comb (co)polymers of ethylenically unsaturated monomers, polyaddition resins and/or polycondensation resins.

12. Process according to Claim 10, **characterized in that** the low molecular mass compounds are crosslinking agents.

13. Process according to any of Claims 1 to 12, **characterized in that** it comprises at least one photoinitiator.

## Revendications

1. Procédé de préparation de revêtements, de couches adhésives et d'éléments d'étanchéité à base d'un mélange de matières I thermodurcissable, contenant
(I) au moins un composant qui, en moyenne statistique, contient dans la molécule
(A) au moins un groupe fonctionnel avec au moins une liaison qui est activable thermiquement et/ou par un rayonnement actinique,
et/ou
(B) au moins un groupe fonctionnel réactif qui peut donner lieu à des réactions thermiques de réticulation avec des groupes du type propre et/ou des groupes fonctionnels réactifs complémentaires,
à la condition que des groupes (A) et (B) soient toujours présents dans le mélange de matières,
à l'exception de la dispersion de polyuréthanne qui est constituée de polyisocyanates aliphatiques, de composés comportant des groupes fonctionnels réactifs vis-à-vis des isocyanates ainsi que des liaisons activables par un rayonnement actinique, de composés aliphatiques de faible poids moléculaire comportant des groupes fonctionnels réactifs vis-à-vis des isocyanates, de composés comportant des groupes fonctionnels réactifs vis-à-vis des isocyanates et des groupes fonctionnels dispersants, d'agents de neutralisation pour les groupes fonctionnels dispersants, d'agents de blocage pour des groupes isocyanate et/ou de composés comportant des groupes isocyanate bloqués, les groupes isocyanate bloqués étant introduits dans la dispersion de polyuréthanne par la réaction des agents de blocage avec des prépolymères de polyuréthanne contenant des groupes isocyanate,
et
(II) 0,5 à 15 % en poids, par rapport au corps solide du mélange de matières thermodurcissable, d'au moins un amorceur brisant les C-C,
ou à base
d'un mélange de matières II thermodurcissable, contenant
(I) au moins un composant qui, en moyenne statistique, contient dans la molécule
(A) au moins un groupe fonctionnel avec au moins une liaison qui est activable thermiquement et/ou par un rayonnement actinique,
et/ou
(B) au moins un groupe fonctionnel réactif qui peut donner lieu à des réactions thermiques de réticulation avec des groupes du type propre et/ou avec des groupes fonctionnels réactifs complémentaires,
à la condition que des groupes (A) et (B) soient toujours présents dans le mélange de matières,
et
(II) un mélange d'éthers silyliques de benzopinacol monomères et oligomères,
**caractérisé en ce que**
les mélanges de matières thermodurcissables I et/ou II sont durcis purement par voie thermique.

2. Procédé suivant la revendication 1, **caractérisé en ce que**, pour le mélange de matières I thermodurcissable, on utilise, comme amorceurs brisant les C-C, des benzopinacols.

3. Procédé suivant la revendication 2, **caractérisé en ce qu'**on utilise de l'éther silylique de benzopinacol.

4. Procédé suivant la revendication 3, **caractérisé en ce que**, comme éther silylique de benzopinacol, on utilise un mélange d'éthers silyliques de benzopinacol monomères et oligomères.

5. Procédé suivant la revendication 1, **caractérisé en ce que**, pour le mélange de matières thermodurcissable II, on utilise un mélange d'éthers silyliques de benzopinacol des formules générales I et II : 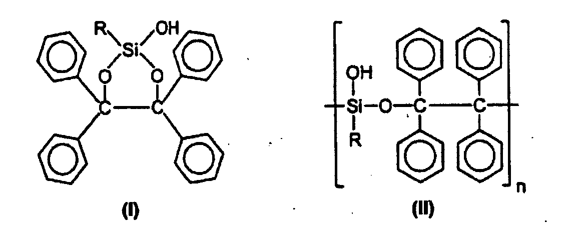 dans lesquelles la variable R des formules générales I et II représente un radical alkylène comportant 1 à 10 atomes de carbone, un radical cycloalkyle comportant 3 à 10 atomes de carbone et/ou un radical aryle comportant 6 à 12 atomes de carbone, l'indice n de la formule générale II représentant un nombre entier de 2 à 100.

6. Procédé suivant l'une des revendications 1 à 5, **caractérisé en ce que**, comme liaisons activables par un rayonnement actinique, on utilise des simples liaisons carbone-hydrogène ou des simples liaisons ou doubles liaisons carbone-carbone, carbone-oxygène, carbone-azote, carbone-phosphore ou carbone-silicium.

7. Procédé suivant l'une des revendications 1 à 6, **caractérisé en ce qu'**on utilise des doubles liaisons carbone-carbone.

8. Procédé suivant l'une des revendications 1 à 7, **caractérisé en ce que** les doubles liaisons se présentent sous la forme de groupes (méth)acrylate, éthacrylate, crotonate, cinnamate, éther vinylique, ester vinylique, dicyclopentadiényle, norbornényle, isoprényle, isopropényle, allyle ou butényle, de groupes éther dicyclopentadiénylique, norbornénylique, isoprénylique, isopropénylique, allylique ou buténylique ou de groupes ester dicyclopentadiénylique, norbornénylique, isoprénylique, isopropénylique, allylique ou buténylique.

9. Procédé suivant l'une des revendications 1 à 8, **caractérisé en ce que**, comme groupes fonctionnels réactifs complémentaires, on utilise, d'une part, des groupes thio, hydroxy, amino, N-méthylolamino, N-alcoxyméthylamino, imino, carbamate, allophanate et/ou carboxy et, d'autre part, des groupes anhydride, époxy, isocyanate bloqué et non bloqué, uréthanne, méthylol, éther de méthylol, siloxane, carbonate et/ou bêta-hydroxyalkylamide.

10. Procédé suivant l'une des revendications 1 à 9, **caractérisé en ce que**, pour ce qui concerne les composants, il s'agit de composés de faible poids moléculaire, d'oligomères et/ou de polymères.

11. Procédé suivant la revendication 10, **caractérisé en ce que**, pour ce qui concerne les oligomères et polymères, il s'agit de (co)polymères linéaires et/ou ramifiés et/ou de type peigne ayant une structure statistique, alternante et/ou de type bloc de monomères éthyléniquement insaturés, de résines de polyaddition et/ou de résines de polycondensation.

12. Procédé suivant la revendication 10, **caractérisé en ce que**, pour ce qui concerne les composés de faible poids moléculaire, il s'agit d'agent de réticulation.

13. Procédé suivant l'une des revendications 1 à 12, **caractérisé en ce qu'**il comporte au moins un photo-amorceur.
